# EUROPÄISCHE PATENTANMELDUNG

(11) **EP 4 239 163 A1**
(43) Veröffentlichungstag der Anmeldung: **06.09.2023**
(21) Anmeldenummer: 23159553.9
(22) Anmeldetag: 02.03.2023
(51) Int. Cl.: F01D 5/14, F01D 5/34

(54) **BLISK FÜR EINE GASTURBINE**

(30) Priorität: 04.03.2022 US 202263316443 P
(71) Anmelder: MTU Aero Engines AG, 80995 München (DE)
(72) Erfinder: Hanschke, Benjamin, 80995 München (DE); Halcoussis, Alexander, 80995 München (DE); Rekosiewicz, Amadeusz, 36-002 Jasionka (PL); Thon, Moritz, 80995 München (DE); Linke, Benjamin, 80995 München (DE)

(57) **Zusammenfassung**

Die Erfindung betrifft einen Bliskabschnitt für eine Gasturbine, umfassend zumindest eine erste Schaufel mit einem Schaufelblatt, einer Vorderkante, einer Hinterkante, einem Schaufelfuß, einer Saugseite und einer Druckseite, eine Plattform, und ein erstes Fillet mit einer Rissbeeinflussungseinrichtung. Die Robustheit der Gasturbine, wird erfindungsgemäß dadurch verbessert, dass an der Vorderkante (12) der ersten Schaufel (10) zumindest auf dem ersten Fillet (30) eine erste Oberflächenstruktur (50) angeordnet ist, welche zur Rissbeeinflussung und zur Strömungsbeeinflussung mit der Rissbeeinflussungseinrichtung (40) zusammenwirkt.

## Beschreibung

Die Erfindung betrifft eine Blisk für eine Gasturbine, umfassend zumindest eine erste Schaufel mit einem Schaufelblatt, einer Vorderkante, einer Hinterkante, einem Schaufelfuß, einer Saugseite und einer Druckseite, eine Plattform, und ein erstes Fillet mit einer Rissbeeinflussungseinrichtung.

Rotoren und/oder Blisks sind auf einer Triebwerkswelle angeordnet, mit der sie um eine Triebwerksachse rotieren. Zur Beschreibung der in den Triebwerken vorkommenden Geometrien sind daher drei Hauptachsen definiert. Die erste Hauptachse verläuft in Richtung der Triebwerksdrehachse und wird auch als Längsachse bezeichnet, die in Axialrichtung verläuft. Durch die erste Hauptachse wird ein Vorne und ein Hinten der jeweils betrachteten Geometrie festgelegt, wobei vorne der Eintritt und hinten der Austritt des Strömungsgases erfolgt. Die zweite Achse verläuft entlang einer auf der Triebwerksdrehachse senkrecht stehenden Richtung und wird auch als Radialachse bezeichnet, die in Radialrichtung verläuft. Durch die zweite Hauptachse wird ein Außen und ein Innen des Triebwerks bestimmt, wobei innen die Triebwerksachse liegt und die Radialrichtung von der Triebwerksachse nach außen verläuft. Die dritte Hauptachse verläuft in Umfangsrichtung senkrecht zu den beiden anderen Hauptachsen und verbindet die durch die ersten beiden Hauptachsen gebildeten Meridianschnitte. Die drei Hauptachsen bestimmen zusammen drei Hauptebenen: Meridianebenen, die von der Längsachse und jeweils einer Radialachse aufgespannt sind; Umfangsebenen, die auf einer Zylindermantelfläche um die Drehachse liegen; und Querschnittebenen des Triebwerks, die normal zu der Triebwerksdrehachse angeordnet sind.

Schaufeln mit komplexer räumlicher Geometrie werden normalerweise durch übereinander gestapelte Schaufelprofile beschrieben, deren Profilflächenerstreckungen nicht zwingend in nur einer Umfangsebene liegen müssen, sondern als geschwungen ausgeführte Schaufelprofile auch die anderen Hauptebenen schneiden können. Diese Gestaltung ist hauptsächlich der aerodynamischen Konstruktion der Schaufeln und der Vorgaben an den Hauptströmungskanal, dessen Ränder, insbesondere das Innendeckband, nicht achsparallel zur Hauptachse verlaufen müssen, geschuldet. Die endgültige Form, insbesondere im Naben- beziehungsweise Deckbandbereich, weicht zusätzlich aus strukturmechanischen Gründen von diesem aerodynamisch optimierten, insbesondere idealen, Schaufelprofil ab; in den meisten Fällen sind in diesem Deckbandbereich sogenannte Fillets angeordnet. Die geometrischen Schwerpunkte der aerodynamisch optimierten Schaufelprofile bilden eine Stapellinie, wobei die Stapellinie ein Maß für die Neigung (engl. "lean") der Schaufel darstellt.

Schaufelprofile werden ferner durch eine von der Vorderkante zu der Hinterkante des Schaufelprofils verlaufende Skelettlinie (engl. "camber line"), sowie durch die das Schaufelprofil um laufenden und typischerweise eine Tropfenform mit Saug- und Druckseite bildenden Randlinien an der Schaufeloberfläche beschrieben.

Die Skelettlinie ist die Profilmittellinie von der Vorderkante zu der Hinterkante der Schaufel und entspricht einer Verbindungslinie durch alle Mittelpunkte von in das Schaufelprofil einbeschriebenen Kreisen. Diese Verbindungslinie kann in einfachster Näherung durch aneinandergereihte Geraden, aber auch durch Splines oder andere polynom iale Kurven durch die Mittelpunkte, beschrieben werden. Bei einer axialen Unterteilung der Schaufel in hundert Teile und mehr, beispielsweise durch hundert axial äquidistant zu einander beabstandete einschreibende Kreise und entsprechende Verbindung der Kreismittelpunkte durch Geraden, ist eine hinreichende Genauigkeit für den Verlauf der Skelettlinie erreicht, die einen zumindest ersten Anhaltspunkt bei der Bestimmung der geometrischen Lagen der beteiligten Punkte dienen kann.

Vorder- und Hinterkante können ebenfalls durch Kreisabschnitte gebildet werden, da man in Strömungsmaschinen und gerade in den Hauptgaskanälen dieser Strömungsmaschinen scharfe Kanten vermeiden möchte. Nachfolgend sollen Vorderkante und Hinterkante aber auf eine Linie, das heißt eine Aneinanderreihung von Punkten auf der Oberfläche der Schaufel reduziert sein. Um einen Punkt dieser Vorderkantenlinie beziehungsweise Hinterkantenlinie auf einem Profil als Vorderkantenpunkt beziehungsweise als Hinterkantenpunkt festzulegen, dient folgendes Verfahren. Es lassen sich einschreibende Kreise bis an die Vorderbeziehungsweise Hinterkante der Schaufeln legen. An der Vorderkante und an der Hinterkante verläuft die Skelettlinie von dem Vorderkantenkreismittelpunkt bzw. von dem Hinterkantenkreismittelpunkt gerade in Richtung auf die Vorder- bzw. Hinterkante zu. In guter Näherung entspricht diese Richtung der Richtung der Verbindungslinie des vorletzten zum letzten Kreismittelpunkt der jeweiligen einschreibenden Kreise, weil in diesem Bereich mit einem stetigen und konvergierenden Verlauf der Skelettlinie zu rechnen ist, wenn die Kreismittelpunkte ausreichend nahe beieinander liegen, das heißt wenn die Staffelung der betrachteten Geometriepunkt ausreichend fein ist. Diese Definition dient zur Bestimmung der Vorder- und Hinterkante insbesondere bei unbekannter Schaufelgeometrie, das heißt nicht aus der Konstruktion vorliegenden Daten zu der Schaufelgeometrie. Eine von der Vorderkante zu der Hinterkante aufgespannte gerade Linie wird als Schaufelsehne (engl. "chord) bezeichnet. Wenn nicht anders angegeben, sind Angaben, die auf die Sehnenlänge bezogen sind, als auf die Sehnenlänge projizierte Oberflächenpunkte der darüber- oder darunterliegenden Struktur in beziehungsweise entgegen der Umfangsrichtung zu verstehen.

Es wird zur Bestimmung der quantitativen Größen als hinreichend approximiert angesehen, wenn die Lage der zu bestimmenden Punkte der entsprechenden Schaufelgröße (axiale Erstreckung, radiale Erstreckung, Umfangserstreckung) zumindest auf ein Zwanzigstel der Ausdehnung der Schaufel in der entsprechenden Raumrichtung genau bestimmt werden kann. Wenn es Anhaltspunkte dafür gibt, dass eine feinere Staffelung nötig wäre oder betrachtete Geometrien sehr eng an dieser Beschreibung und in den Ansprüchen genannte Werte heranreichen, sollte diese Approximation entsprechend verfeinert werden.

Als maximale Profildicke eines Profils wird der größtmögliche Kreisdurchmesser eines Kreises zwischen Profilsaugseite und Profildruckseite bezeichnet, wobei der Mittelpunkt dieses größten Kreises auf der Skelettlinie angeordnet ist. Eine Anbindungsfläche zu einer Rotornabe bzw. zu einem Rotordeckband wird als Schaufelfuß bezeichnet.

Da man bemüht ist, Verwirbelungen und damit Verluste in Triebwerken möglichst gering zu halten und ungewollte Spannungen im Material der Schaufeln und der Plattform der Scheibe, die auch als Nabe, Rotornabe, Deckband oder Innendeckband bezeichnet wird, zu vermeiden oder zu verteilen, so dass die ungewollten Spannungen unschädlich sind, werden die Übergänge von der Schaufel zu der Plattform im Bereich des Schaufelfußes durch das Vorsehen eines Fillets möglichst stetig ausgestaltet. Dadurch entstehen von dem aerodynamisch idealen beziehungsweise optimierten Schaufelprofil abweichende Geometrien, so dass die genaue Lage der Vorder- und Hinterkante durch das oben beschriebene Vorgehen möglicherweise nicht mehr eindeutig bestimmt werden kann, denn die Kreisformen der Schaufelenden an der Vorderkante und an der Hinterkante werden durch das Vorhandensein eines Fillets, also einer von einer aerodynamisch optimierten Form abweichenden Form der Schaufel, aufgelöst. Erschwerend kommt hinzu, dass die bei der Konstruktion berechneten Schaufelprofile nicht entlang einer zylindrischen Umfangsebene definiert sind, sondern diese schneiden können. Ferner kann im Bereich des Schaufelfußes die Plattform- beziehungsweise Naben- oder Deckbandkonturierung (engl. "endwall contouring") des Rotorgrundkörpers an die Strömung angepasst sein, was wiederum erschwerend für das Auffinden des Beginns des Fillets ist.

Bei der Bestimmung der Größen einer solchen zu vermessenden Schaufel, insbesondere einer Anbindungsstruktur wie ein Fillet, können die Oberflächen der Schaufel und der Plattform sowie des Übergangs, dem Fillet, zwischen Schaufel und Plattform beispielsweise optisch vermessen werden. Die genaue Lage der Vorder- und Hinterkante, der genaue Anbindungsbereich von dem aerodynamisch idealen Profil auf ein Fillet und der Anbindungsbereich von dem Fillet auf die Plattform der Rotorscheibe sind dennoch nur schwer zu bestimmen. Innen liegende Größen sind in der Regel nicht bekannt und die Übergänge an der Oberfläche von dem Schaufelblatt auf das Fillet, was im Folgenden als Schaufelverbindung bezeichnet wird, und weiter auf die Plattform der Blisk- beziehungsweise Rotorscheibe, was im Folgenden als Plattformverbindung bezeichnet wird, sind aufgrund der aerodynamischen Form der Schaufel in der Regel stetig. Das heißt ein genauer Übergangspunkt ohne Kenntnisse der Strömung und dem Auslegungspunkt der Schaufeln ist ebenfalls nur schwer genau zu bestimmen.

Um ein Bestimmen der quantitativen Größen von zu vermessenden Schaufeln bei Unkenntnis der aerodynamischen Verhältnisse und der konstruktiven Überlegungen zunächst hinreichend in guter Näherung zu ermöglichen, werden Schnitte durch die Schaufel herangezogen, die in einer der Hauptebenen liegen, wobei eine Staffelung der Abstände zur näherungsweisen Bestimmung der betrachteten Geometrien entlang der drei Hauptachsen jeweils mindestens um ein Hundertstel von der größten Längserstreckung der Schaufel, der größten Radialerstreckung der Schaufel und der größten Umfangserstreckung der Schaufel erfolgt. Mit anderen Worten wird ein Gitter (analog zu einem Gitter bei einer Finiten Elemente Methode, abgekürzt FEM) mit einer Feinheit von in jeweils mindestens zwanzig Schritten in allen drei Hauptrichtungen, nämlich zwischen dem vordersten und hintersten Punkt der Schaufel, den am weitesten innen und außen liegenden Punkten der Schaufel sowie zwischen den in Umfangsrichtung am weitesten auseinander liegenden Punkten der Schaufel gelegt.

Die größten Umfangs- und Axialerstreckungen der Schaufel sind an der Plattform zu erwarten, weil dort der Anbindungsbereich, das Fillet, von dem Schaufelfuß zu dem Rotorgrundkörper erfolgt und der Schaufelfuß die größte Ausdehnung aufweist.

Um den axialen Beginn und das axiale Ende, also die Anbindungspunkte, des Fillet in axialer Richtung zu bestimmen, ist die Kontur der Oberfläche im Bereich der Plattform zu betrachten. Liegt in beziehungsweise entgegen der axialen Richtung an den Anbindungsbereich angrenzend eine Vertiefung der Plattform vor, so wird der Anbindungspunkt des Fillets auf die Plattform ein Wendepunkt der Oberfläche sein. Liegt in beziehungsweise entgegen der axialen Richtung eine Erhöhung der Plattform vor, so wird der Anbindungspunkt ein minimaler radialer Abstand der Oberfläche zu der Rotordrehachse sein. Liegt in der betrachteten Ebene eine Erstreckung mit einem geraden Verlauf der Plattform vor, so wird der Anbindungspunkt durch einen Beginn einer Krümmung definiert.

Um den Umfangsbeginn oder das Umfangsende des Fillets in Umfangsrichtung zu bestimmen, ist die Kontur der Oberfläche im Bereich der Plattform zu betrachten. Ein Übergang von der Oberfläche der Plattform auf eine Anbindungsstruktur, beispielsweise ein Fillet, kann in einem Bereich erwartet werden, in dem sich die Krümmung der Oberfläche ändert. Liegt in beziehungsweise entgegen der Umfangsrichtung an den zu erwartenden Bereich, in dem sich der Übergang befinden soll, angrenzend eine Vertiefung vor, so wird der Übergangspunkt des Fillets auf die Plattform ein Wendepunkt der Oberfläche sein. Liegt in beziehungsweise entgegen der Umfangsrichtung eine Erhöhung der Plattform vor, so wird der Übergangspunkt ein minimaler radialer Abstand der Oberfläche zu der Rotorachse sein. Liegt in der betrachteten Ebene eine Erstreckung der Plattform mit einem geraden Verlauf vor, so wird der Übergangspunkt durch einen Beginn einer Krümmung definiert.

Der axiale Beginn und das axiale Ende des Fillets sowie der Umfangsbeginn und das Umfangsende des Fillets sind Punkte, die jeweils einen radialen Abstand zu der Drehachse der Strömungsmaschine aufweisen. Über denjenigen dieser Punkte mit dem geringsten radialen Abstand lässt sich eine Umfangsebene als Zylindermantelfläche definieren, die im Folgenden ein Hilfsdeckband der Plattform definiert und als Anknüpfungspunkt für die Ermittlung der radialen Erstreckung der Schaufel, so auch der maximalen radialen Erstreckung, in erster Näherung dient.

Die größte radiale Erstreckung des Schaufelblatts lässt sich dann hilfsweise durch Bilden eines weiteren Zylinders um die Triebwerksdrehachse bilden, dessen Mantelfläche nur einen einzigen, nämlich den äußersten Punkt der Schaufel schneidet.

Aus diesen maximalen Erstreckungen lassen sich die Staffelungen oder Gitter für die Bestimmung sämtlicher Größen der Schaufel wie oben angegeben herleiten, insbesondere Gitter deren Kantenlängen jeweils ein Zwanzigstel oder weniger von der maximalen Längs-, Radial- und Umfangserstreckung der Schaufel betragen. Die Feinheit der Gitter sollte von den betrachteten Größen abhängen, um mit ausreichender Sicherheit einen Vergleich mit den Größen herstellen zu können.

Um einen Anbindungspunkt von dem Schaufelblatt auf eine Anbindungsstruktur, zum Beispiel einem Fillet, des Schaufelblatts auf die Plattform bei unbekannten Strömungsverhältnissen oder ohne Kenntnis der zugrundeliegenden strukturmechanischen Überlegungen zu bestimmen, wird die Schaufel wie oben beschrieben in eine Gitterunterteilung der Meridianebenen, der Querschnittsebenen sowie der Umfangsebenen eingefasst. Es werden dann für die Bestimmung der Anbindungspunkte von Schaufelblatt zu der Anbindungsstruktur in erster Näherung diejenigen Punkte der Schaufeloberfläche in dem Bereich, in dem der Beginn der Anbindungsstruktur zu erwarten ist, bestimmt, die gegenüber zumindest einem entlang der Oberfläche betrachtet radial äußeren und inneren Nachbarpunkten eine größere Krümmungsänderung aufweisen. Für die Bestimmung der Anbindungspunkte von der Anbindungsstruktur auf die Plattform wird analog verfahren, wobei hier sowohl die in axialer Richtung als auch in Umfangsrichtung benachbarten Punkte auf der Oberfläche der Schaufel beziehungsweise der Plattform zum Vergleich der Krümmungsänderung herangezogen werden. Nach Bestimmung der Anbindungsbereiche sollten nunmehr die vermessenen Oberflächen sowie Anfang und Ende der Anbindungsstruktur in radialer Richtung bekannt sein. In der jeweiligen Umfangsebene der Vorderkante und der Hinterkante kann eine Erweiterungslinie, die auch als Extrusionslinie bezeichnet werden kann, der zur Bestimmung der Vorderkante beziehungsweise Hinterkante herangezogenen Geraden erzeugt werden. Von dieser Erweiterungslinie kann auf die Anbindungsstruktur bis zum Schaufelfuß eine Linie in radialer Richtung projiziert werden, die im Folgenden auf der Anbindungsstruktur als Vorderkante beziehungsweise Hinterkante dienen soll. In den Fällen, in denen die Schaufeln und deren Anbindungsstrukturen aufgrund einer geometrischen Begrenzung der Scheibe in axialer Richtung durchschnitten sind, kann es zwei Vorderkanten oder Hinterkanten in diesem Bereich geben, von denen an die entsprechenden anderen Größen zur Beschreibung der Anbindungsstruktur zu bestimmen sind. Entlang jedem der Anbindungsbereiche können jeweils zwischen Vorderkante und Hinterkante zumindest jeweils zumindest zwanzig Gitterpunkte gelegt werden, wobei zwei gegenüberliegende Punkte der beiden auf entweder der Saugseite oder der Druckseite angeordneten Anbindungsbereiche entlang der gemessenen Oberfläche verbunden werden, so dass eine entsprechend feine Unterteilung der Anbindungsstruktur ermöglicht wird. Hieraus lassen sich die Ausdehnungen der in dieser Anmeldung beschriebenen Bereiche der Anbindungsstruktur, das heißt des Fillets, und dessen Varianten zumindest in erster Näherung bestimmen.

Bei den oben beschriebenen Verfahren zur Bestimmung der Größen und Lagen handelt es sich um erste Näherungsverfahren, um eine unbekannte Schaufel einordnen zu können. Eine Überprüfung sollte wenn geboten in einem weiteren Schritt möglichst anhand der genauen Geometrie und der Kenntnis der Anbindungen vorgenommen werden. Genauere Ergebnisse liefert das Heranziehen tatsächlicher Größen beispielsweise aus Konstruktionszeichnungen.

Es ist die Aufgabe der Erfindung eine Blisk anzugeben, welche die Robustheit der Gasturbine verbessert.

Eine erfindungsgemäße Blisk, insbesondere eine Verdichterblisk, für eine Gasturbine umfasst zumindest eine erste Schaufel mit einem Schaufelblatt, einer Vorderkante, einer Hinterkante, einem Schaufelfuß, einer Saugseite und einer Druckseite, eine Plattform bzw. ein Ringraum (auch Endwall genannt) der Blisk, ein erstes Fillet, das die erste Schaufel mit der Plattform verbindet. Die Aufgabe wird von der erfindungsgemäßen Blisk des Anspruchs 1 dadurch gelöst, dass an der Vorderkante der ersten Schaufel zumindest auf dem ersten Fillet eine erste Oberflächenstruktur angeordnet ist, welche eine Rissbeeinflussung und Strömungsbeeinflussung bewirkt. Durch eine gezielte Anordnung einer Oberflächenstruktur auf dem Fillet und damit eine gezielte Ausbildung einer Filletoberfläche durch die Oberflächenstruktur kann sowohl die Stabilität der Schaufel-Plattform-Verbindung, insbesondere des Fillets, und damit der Gasturbine vorteilhaft verbessert werden. Besonders vorteilhaft ist die Ausbildung der Oberflächenstruktur in einem unteren Bereich des Fillets, insbesondere in einem Plattformbereich des Fillets, welcher von der Plattform höchstens 40%, insbesondere höchstens 35%, besonders bevorzugt höchstens 30% einer Quererstreckung des Fillets beabstandet angeordnet ist. Eine Oberflächenstruktur kann gegenüber einer Nominalgeometrie ausgebildet sein und kann als eine Erhabenheit also eine Art Hügel oder Auswölbung (auch Patch genannt) gegenüber dieser ausgebildet sein. Anders formuliert kann die Oberflächenstruktur eine Verdickung oder Materialverstärkung in einem der Vorderkante (Eintrittskante ) vorgelagerten Bereich des Fillets darstellen (Anordnung in Verlängerung der Vorderkante). Die Nominalgeometrie kann durch eine Umfangsfläche der Plattform (entspricht der radialen Außenfläche der Bliskscheibe) oder die einfache Krümmung des Fillets mit Rissbeeinflussungseinrichtung definiert sein. Dabei kann eine Oberflächenstruktur beispielsweise durch eine Wendelinie zwischen der umgebenden und eigenen Oberflächenkrümmung begrenzt sein. Diese Definitionen betreffen nicht nur die erste Oberflächenstruktur, sondern auch die übrigen weiter unten noch näher beschriebenen Oberflächenstrukturen.

Weitere Vorteile und Merkmale ergeben sich aus der nachfolgenden Beschreibung einiger bevorzugter Ausführungsbeispiele sowie den abhängigen Ansprüchen.

In einer ersten vorteilhaften Ausgestaltung der Blisk weist das erste Fillet eine Rissbeeinflussungseinrichtung auf. Durch eine solche Rissbeeinflussungseinrichtung können entstehende Risse so beeinflusst bzw. abgelenkt werden, dass sie nicht in die Bliskscheibe wandern, sondern sich nur im Schaufelblatt ausbreiten. Ferner können bei Kombination einer Rissbeeinflussungseinrichtung mit einer oben Beschriebenen Oberflächenstruktur die aerodynamische Randbedingungen vollständig vorteilhaft berücksichtigt werden, wenn diese aufgrund der strukturmechanischen Randbedingungen für die Rissbeeinflussungseinrichtung in den Hintergrund treten mussten, d.h. es ergibt sich ein synergistischer Effekt aus strukturmechanischer und aerodynamischer Optimierung. Die Oberflächenstruktur kann zumindest in solchen Bereichen auf dem Fillet ausgebildet sein, in denen in Quererstreckung des Fillets auch die Rissbeeinflussungseinrichtung ausgebildet ist.

Gemäß einer weiteren bevorzugten Weiterbildung kann die Rissbeeinflussungseinrichtung zumindest in einem vorderen Bereich des Fillets ausgebildet sein, welcher vordere Bereich sich vor einer Vorderkante und um 30% der Längserstreckung des Fillet von der Vorderkante des Schaufelblatts in Richtung einer Hinterkante erstreckt, wobei die erste Oberflächenstruktur in dem vorderen Bereich des Fillets angeordnet ist. Versuche haben gezeigt, dass der vordere Bereich an den Schaufeln der Blisk, insbesondere einer Verdichterblisk, der am stärksten strukturell belastete Bereich in dem Ringraum ist, so dass ein dort angeordnete Oberflächenstruktur zur Verringerung und/oder Verteilung lokaler Spannungen in dem Bauteil beitragen kann und so die Stabilität des Bauteils erhöht.

In einer vorteilhaften Weiterbildung der Erfindung ist die Rissbeeinflussungseinrichtung zumindest in einem ersten Abschnitt ein in Quererstreckung des Fillets mittig angeordneter Bereich, in dem ein minimaler Radius des Fillets ausgebildet ist und der mindestens um 30%, insbesondere mindestens 35%, besonders bevorzugt mindestens 40%, der Quererstreckung des Fillets von der Plattform entfernt angeordnet ist und wobei die erste Oberflächenstruktur eine Oberflächenerhöhung ist, welche gegenüber angrenzenden Oberflächen erhaben ist. Dadurch kann zum einen der aufgrund der Rissbeeinflussungseinrichtung freigegebene Strömungsraum für eine Verstärkung der Blisk genutzt werden, zum anderen können die so aus der Schaufel laufenden Kräfte auf der Oberfläche der Plattform verteilt werden.

In einer weiteren Ausbildung der Blisk ist vorgesehen, dass die Rissbeeinflussungseinrichtung ein Podest des Fillets ist und dass die erste Oberflächenstruktur eine Oberflächensenke ist, welche gegenüber angrenzenden Oberflächen vertieft ist. Dadurch kann auf vorteilhafte Weise die durch die Rissbeeinflussungseinrichtung eingebrachte Ringraumverringerung ausgeglichen werden, so dass ein in Relation zu einer Blisk ohne Rissbeeinflussungseinrichtung ein zumindest gleicher oder erhöhter Massenstrom durch den Ringraum strömen kann.

Die Blisk kann in einer weiteren Ausbildung so weitergebildet sein, dass die erste Oberflächenstruktur in einem druckseitigen, vorderen Bereich der ersten Schaufel in Axialrichtung vor einer Vorderkante des Schaufelblatts der ersten Schaufel angeordnet ist.

Es kann in einer weiteren Ausbildung ferner vorgesehen sein, dass sich die erste Oberflächenstruktur bis auf die Plattform erstreckt. Die Erstreckung kann in Richtung auf eine weitere Schaufel erfolgen und/oder in Richtung der Hinterkante der Schaufel. Eine Oberflächenstruktur auf der Plattform hat den Vorteil, dass auch dortige Spannungen abgebaut werden können und die Strömung beeinflusst werden kann. Ferner können Kräfte noch besser geleitet und verteilt werden. Ferner können beispielsweise Drall erzeugende Strömungen am Schaufelfuß gezielt geschwächt werden.

Ferner kann in einer Ausbildung der Blisk so weitergebildet sein, dass eine erste weitere Oberflächenstruktur saugseitig in einem Bereich zwischen 5% und 95%, insbesondere 30% und 70%, der Sehnenlänge der ersten Schaufel, gemessen auf der maximalen Höhe einer Schaufelverbindung zwischen dem Fillet und dem Schaufelblatt, zumindest auf dem Fillet angeordnet ist. Die erste weitere Oberflächenstruktur kann auch saugseitig von der Vorderkante der Blisk um mindestens 5%, 10%, 15%, 20%, 25%, 30%, 35%, 40%, 45%, 50%, 55%, 60%, 65%, 70% der Sehnenlänge der ersten Schaufel beabstandet sein. Ergänzend oder alternativ kann die erste weitere Oberflächenstruktur auch saugseitig von der Hinterkante der Blisk um mindestens 5%, 10%, 15%, 20%, 25%, 30%, 35%, 40%, 45%, 50%, 55%, 60%, 65%, 70% der Sehnenlänge der ersten Schaufel beabstandet sein. Die erste weitere Oberflächenstruktur kann sich auch auf die Plattform erstrecken. Das Vorsehen einer weiteren Oberflächenstruktur in dem mittleren Bereich der Schaufel auf der Saugseite kann eine saugseitige Spannung in der Blisk günstig beeinflussen.

Ergänzend kann vorgesehen sein, dass die Rissbeeinflussungseinrichtung zumindest in einem mittleren Bereich des Fillets, welcher mittlere Bereich sich von zwischen 5% und 95%, insbesondere 30% bis 70%, der Längserstreckung des Fillets erstreckt, ein in Quererstreckung des Fillets mittig angeordneter Bereich ist, in dem ein minimaler Radius des Fillets ausgebildet ist und der mindestens um 5%, 10%, 15%, 20%, 25%, 30%, insbesondere mindestens 35%, 40% oder 45%, der Quererstreckung des Fillets von der Plattform entfernt ist und dass die erste weitere Oberflächenstruktur eine Oberflächenerhöhung ist, welche gegenüber der angrenzenden Oberfläche erhaben ist. Dadurch kann die Oberfläche auf der Saugseite größere Kräfte aufnehmen und es kommt zu kleineren Spannungen in der Blisk. Der mittlere Bereich kann sich entlang der Längserstreckung des Fillets von der Vorderkante der Blisk ab mindestens 5%, 10%, 15%, 20%, 25%, 30%, 35%, 40%, 45%, 50%, 55%, 60%, 65%, 70% der Längserstreckung des Fillets erstrecken. Ergänzend oder alternativ kann sich der mittlere Bereich entlang der Längserstreckung des Fillets von der Hinterkante der Blisk ab mindestens 5%, 10%, 15%, 20%, 25%, 30%, 35%, 40%, 45%, 50%, 55%, 60%, 65%, 70% der Längserstreckung des Fillets erstrecken.

Alternativ kann vorgesehen sein, dass die Rissbeeinflussungseinrichtung zumindest in einem mittleren Bereich des Fillets, welcher mittlere Bereich sich von 5% bis 95% der Längserstreckung des Fillets erstreckt, ein Podest des Fillets ist und dass die erste Oberflächenstruktur eine Oberflächensenke ist, welche gegenüber der angrenzenden Oberfläche vertieft ist. Dadurch wird zum einen der Strömungsraum vergrößert, so dass ein größerer Massenstrom durch den Strömungsraum geleitet werden kann, zum anderen werden Kräfte in dem Fillet um den Punkt der größten Schaufeldicke besser verteilt. Der mittlere Bereich kann sich entlang der Längserstreckung des Fillets von der Vorderkante der Blisk ab mindestens 5%, 10%, 15%, 20%, 25%, 30%, 35%, 40%, 45%, 50%, 55%, 60%, 65%, 70% der Längserstreckung des Fillets erstrecken. Ergänzend oder alternativ kann sich der mittlere Bereich entlang der Längserstreckung des Fillets von der Hinterkante der Blisk ab mindestens 5%, 10%, 15%, 20%, 25%, 30%, 35%, 40%, 45%, 50%, 55%, 60%, 65%, 70% der Längserstreckung des Fillets erstrecken.

Darüber hinaus kann die Blisk vorteilhaft ausgebildet sein, dass zumindest eine zu der ersten Schaufel benachbarte zweite Schaufel mit einem Schaufelblatt, einer Vorderkante, einer Hinterkante, einem Schaufelfuß, einer Saugseite und einer Druckseite auf der Plattform angeordnet ist, und mit einem zweiten Fillet umfassend eine zweite Rissbeeinflussungseinrichtung mit der Plattform verbunden ist, und dass an der Vorderkante der zweiten Schaufel zumindest auf dem zweiten Fillet eine zweite Oberflächenstruktur angeordnet ist, welche zur Rissbeeinflussung und zur Strömungsbeeinflussung mit der Rissbeeinflussungseinrichtung zusammenwirkt und von der ersten Oberflächenstruktur verschieden ist, und wobei die zweite Oberflächenstruktur eine geringere Erhöhung, wenn die erste Oberflächenstruktur gegenüber den angrenzenden Oberflächen erhaben ist beziehungsweise eine geringere Vertiefung aufweist als die erste Oberflächenstruktur, wenn die erste Oberflächenstruktur gegenüber angrenzenden Oberflächen vertieft ist, und/oder dass eine zweite weitere Oberflächenstruktur saugseitig in einem Bereich zwischen 5% und 95% der Sehnenlänge der zweiten Schaufel, gemessen auf der maximalen Höhe einer Schaufelverbindung zwischen dem zweiten Fillet und dem Schaufelblatt der zweiten Schaufel, zumindest auf dem zweiten Fillet angeordnet ist und von einer ersten weiteren Oberflächenstruktur verschieden ist, und wobei die zweite weitere Oberflächenstruktur eine geringere Erhöhung beziehungsweise eine geringere Vertiefung aufweist als die erste weitere Oberflächenstruktur, und/oder dass zwischen der ersten Schaufel und der zweiten Schaufel auf der Plattform und/oder auf dem ersten Fillet und/oder dem zweiten Fillet eine wannenförmige Senke angeordnet ist. Durch das Vorsehen von analogen zweiten Oberflächenstrukturen an einer weiteren benachbarten Schaufel, die von den ersten Oberflächenstrukturen verschieden sind, lässt sich auf einfache Weise eine Resonanzschwingung, die bei stets gleichen Strukturen an jeder Schaufel auftreten würde, verhindern. Dies kann auch vorteilhaft dadurch erzielt werden, indem zwischen den beiden Schaufeln eine zusätzliche Senke vorgesehen wird, die Wannenförmig ausgebildet ist. Die zweite weitere Oberflächenstruktur kann auch saugseitig von der Vorderkante der Blisk um mindestens 5%, 10%, 15%, 20%, 25%, 30%, 35%, 40%, 45%, 50%, 55%, 60%, 65%, 70% der Sehnenlänge der zweiten Schaufel beabstandet sein. Ergänzend oder alternativ kann die zweite weitere Oberflächenstruktur auch saugseitig von der Hinterkante der Blisk um mindestens 5%, 10%, 15%, 20%, 25%, 30%, 35%, 40%, 45%, 50%, 55%, 60%, 65%, 70% der Sehnenlänge der zweiten Schaufel beabstandet sein.

Die oben beschriebenen Merkmale beschreiben einen ersten Bliskabschnitt der erfindungsgemäßen Blisk.

In einem weiteren Aspekt der Erfindung ist ferner eine Blisk vorgesehen, die weitere, benachbart zu dem mindestens einen ersten Bliskabschnitt angeordnete Bliskabschnitte aufweisen kann, wobei die weiteren Bliskabschnitte identisch zu dem mindestens einen Bliskabschnitt ausgebildet sind oder von diesem verschieden ausgebildet sind. So können weitere Oberflächenstrukturen an oder zwischen weiteren Schaufeln von weiteren Bliskabschnitten vorgesehen sein, die sich von den Oberflächenstrukturen des zumindest einen Bliskabschnitts unterscheiden. Dadurch kann vorteilhaft einem Resonanzverhalten entgegengewirkt werden.

Die Erfindung wird bezüglich der nachfolgenden Zeichnungen anhand einiger bevorzugter Ausführungsbeispiele der Erfindung näher erläutert.
- Fig. 1: einen Ausschnitt einer Blisk mit einem erfindungsgemäßen Ausführungsbeispiel einer Blisk in einer perspektivischen Ansicht
- Fig. 2: zeigt das erfindungsgemäße Ausführungsbeispiel der Blisk in vergrößerter perspektivischer Ansicht und mit mehr Details

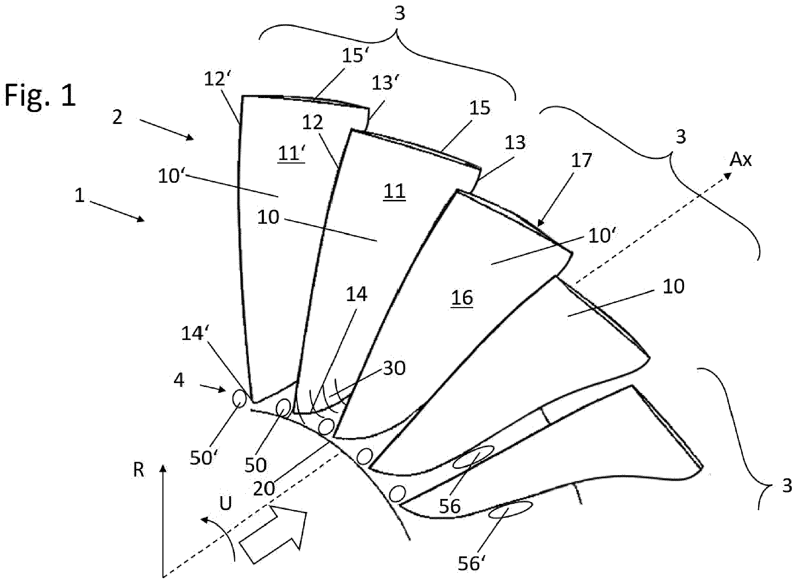

In Fig. 1 ist ein Segment eines Ausführungsbeispiels einer erfindungsgemäßen Blisk 2 perspektivisch dargestellt. Die Blisk 2 ist in einer Gasturbine 1 für ein Flugtriebwerk angeordnet, wobei die Gasturbine 1 in der Fig. 1 durch ihre drei Hauptachsen Ax, R, U angedeutet ist. Die drei Hauptachsen verlaufen in Axialrichtung Ax, Radialrichtung R und Umfangsrichtung U. Die Blisk 2 dient als ein Rotor in einem Verdichter der Gasturbine 1.

Die Blisk 2 umfasst eine Bliskscheibe 4 und eine auf der Bliskscheibe 4 angeordnete Vielzahl an als Laufschaufeln bezeichneten Schaufeln 10, 10', von denen jeweils zwei in dem vorliegenden Ausführungsbeispiel einem Bliskabschnitt 3 zugeordnet sind. Mehrere derartiger Bliskabschnitte 3 sind dabei benachbart zueinander in Umfangsrichtung U angeordnet und erstrecken sich über einen Plattform abschnitt mit jeweils einer ersten Schaufel 10 und einer zweiten Schaufel 10', die sich in dem vorliegenden Ausführungsbeispiel in zumindest einer Eigenschaft voneinander unterscheiden, so dass die unterschiedlichen Ausprägungen unterschiedlicher Sektoren der Blisk 2 das Schwingungsverhalten der Blisk 2 ändert. Diese Eigenschaft kann in der Schaufel selbst, in dem die Schaufel 10, 10' mit der Plattform 20 verbindenden Fillet 30, 30' und/oder mit einer von einer Nominalgeometrie abweichenden Oberflächenstruktur 50, 50', 56, 56` liegen. Sofern nicht anders erwähnt, betreffen die Ausführungen zu einer Schaufel, zu einem Fillet und zu einer Oberflächenstruktur auch die andere Schaufel und das andere Fillet beziehungsweise die anderen Oberflächenstrukturen.

Die Schaufeln 10, 10' sind auf einer Plattformoberfläche 22 einer Plattform 20 der Bliskscheibe 4 beabstandet zueinander in Umfangsrichtung U angeordnet. Die Schaufeln 10, 10', die Plattform 20 und ein jeweils eine der Schaufeln 10, 10' und die Plattform 20 verbindendes Fillet 30, 30' bilden gemeinsam eine Schaufel-Plattform-Verbindung 5. Die Schaufeln 10, 10' weisen ein Schaufelblatt 11, 11' zur Aufnahme aerodynamischer Kräfte, einen Schaufelfuß 14, 14' zur Anbindung an der Plattformoberfläche 20 sowie eine zu einer Ringraum wand der Gasturbine 1 weisende Schaufelspitze 15, 15' auf. Die Blisk 2 dreht sich in Umfangsrichtung U, wobei jeweils eine Saugseite 16, 16' der jeweiligen Schaufel 10, 10' entgegen der Drehrichtung und eine Druckseite 17, 17' der jeweiligen Schaufel 10, 10' in Drehrichtung der Blisk 2 angeordnet sind. Saug- und Druckseite 16, 17, 16', 17` erstrecken sich dabei jeweils von einer Vorderkante 12, 12' bis zu einer Hinterkante 13, 13' der jeweiligen Schaufel 10, 10'.

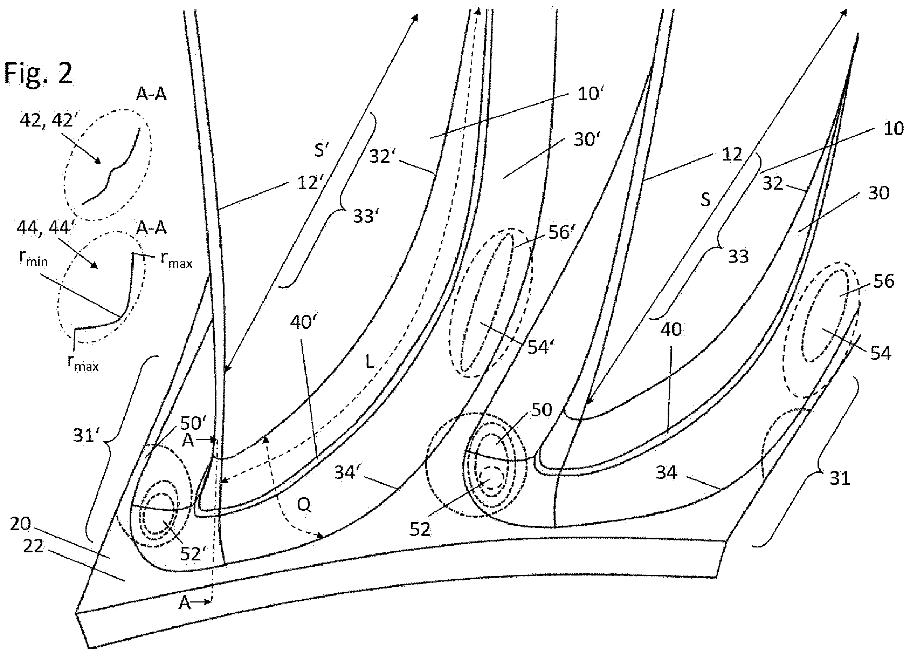

An dem jeweiligen Schaufelfuß 14, 14' ist in einem druckseitigen, vorderen Bereich 31, 31` des Fillets 30, 30' jeweils eine Oberflächenstruktur 50, 50' auf dem Fillet 30, 30' angeordnet, wobei sich die Oberflächenstruktur 50, 50' von dem Fillet 30, 30' auf die Plattform 20 erstreckt. Die Oberflächenstruktur 50, 50' wirkt mit einer Rissbeeinflussungseinrichtung 40, 40' - welche in Fig. 2 noch näher erläutert wird - auf dem Fillet 30, 30' strukturell und aerodynamisch zusammen.

Ferner ist in dem ersten Ausführungsbeispiel an dem jeweiligen Schaufelfuß 14, 14' in einem mittleren, saugseitigen Bereich des Fillets 30, 30' jeweils eine Oberflächenstruktur 50, 50' auf dem jeweiligen Fillet 30, 30' angeordnet, wobei sich die Oberflächenstruktur 50, 50' von dem Fillet 30, 30' auf die Plattform 20 erstreckt.

In Fig. 2 ist ein einzelner Bliskabschnitt 3 aus Fig. 1 in perspektivischer Ansicht dargestellt. Gezeigt ist eine erste Schaufel 10' und eine zweite Schaufel 10', die beide mit einem Fillet 30, 30' an ihrem jeweiligen Schaufelfuß 14, 14' mit der Plattform 20 integral verbunden sind. Jedes Fillet 30, 30' weist eine Rissbeeinflussungseinrichtung 40, 40' auf, wobei ein Schnitt A-A durch das Fillet 30' der zweiten Schaufel 10` dargestellt ist, durch welchen Schnitt A-A zwei Typen der Rissbeeinflussungseinrichtung 40, 40' oben links in der Zeichnung verdeutlicht dargestellt sind. Es versteht sich, dass in einem Ausführungsbeispiel der Erfindung die Rissbeeinflussungseinrichtung 40, 40' beider Schaufeln 10, 10' von einem gleichen Typ ist, wobei der Typ entlang der Schaufel variieren kann. Der erste Typ ist ein Fillet 30, 30' mit einem Podest 42, 42', welches als Rissbeeinflussungseinrichtung 40, 40' wirkt. Der zweite Typ ist durch einen Bereich, welcher mindestens um 30% der Quererstreckung Q des Fillets 30, 30' von der Plattform 20 beabstandet ist und einen minimalen Radius rₘᵢₙ des Fillets 30, 30; aufweist. Der minimale Radius rₘᵢₙ ist dabei zwischen zwei unterschiedlichen maximalen Radien rₘₐₓ des Fillets 30, 30' angeordnet, die an einer Schaufelverbindung 32, 32' beziehungsweise Plattformverbindung 34, 24' angeordnet sind.

Das Fillet 30, 30' erstreckt sich von der Vorderkante 12, 12' der Schaufel 10, 10' bis zu der Hinterkante 13, 13' entlang seiner Längserstreckung L. Quer zu der Längserstreckung verläuft eine Quererstreckung Q des Fillets 30, 30' zwischen einer Schaufelverbindung 32, 32' und einer Plattformverbindung 34, 34'.

In dem vorderen Bereich 31, 31' ist eine erste Oberflächenstruktur 50, 50' angeordnet und mit gestrichelten Höhenlinien dargestellt, welche sich von dem Fillet 30, 30' ausgehend auf die Plattform 20 erstreckt. Der vordere Bereich erstreckt sich dabei von dem Fillet 30, 30' vor der Vorderkante 12, 12' bis zu 30% in Längserstreckung des Fillets hinter der Vorderkante 12, 12' an der Schaufelverbindung 32, 32'. Die erste Oberflächenstruktur 50, 50' kann sich auf das benachbarte Fillet 30, 30' einer Saugseite 16 einer benachbarten Schaufel 10 erstrecken.

In dem Fall, dass die Rissbeeinflussungseinrichtung 40, 40' in diesem vorderen Bereich 31, 31' ein Podest 42, 42` ist, dann ist die Oberflächenstruktur 50, 50' in dem vorliegenden Ausführungsbeispiel eine Vertiefung, insbesondere eine wannenförmige Senke. Dadurch wird ein Volumen des Strömungsraums ausgeglichen, so dass der Massenstrom durch den Strömungskanal der Gasturbine 1 nicht beeinflusst wird.

In dem Fall, dass die Rissbeeinflussungseinrichtung 40, 40' in diesem vorderen Bereich 31, 31' ein wie oben beschrieben mittlerer Bereich 44, 44' mit einem minimalen Radius rₘᵢₙ ist, ist die Oberflächenstruktur 50, 50' eine Erhöhung.

Man erkennt, dass die erste Oberflächenstruktur 50 an der ersten Schaufel 10 verschieden zu der zweiten Oberflächenstruktur 50' an der zweiten Schaufel 10` ausgebildet ist. So kann die erste Oberflächenstruktur 50 eine größere Vertiefung oder Erhöhung sein als die zweite Oberflächenstruktur 50'. Dadurch wird ein entlang der Umfangsrichtung U ein sich ändernder, in dem vorliegenden Ausführungsbeispiel alternierender, Spannungswiderstand in die Blisk eingeführt.

Ferner ist an dem jeweiligen Schaufelfuß 14, 14' saugseitig in einem Bereich 33, 33' zwischen 30% und 70% der Sehnenlänge S, S' der Schaufel 10, 10' jeweils eine weitere Oberflächenstruktur 56, 56' auf dem jeweiligen Fillet 30, 30' angeordnet, wobei sich in dem vorliegenden Ausführungsbeispiel die Oberflächenstruktur 50, 50' von dem Fillet 30, 30' auf die Plattform 20 erstreckt.

Analog zu der ersten Oberflächenstruktur 50, 50' kann die weitere Oberflächenstruktur 56, 56' in dem Fall, dass die Rissbeeinflussungseinrichtung 40, 40' in dem Bereich 33, 33' zwischen 30% und 70% der Sehnenlänge S, S' ein Podest 42, 42` ist, in dem vorliegenden Ausführungsbeispiel eine Vertiefung sein. In dem Fall, dass die Rissbeeinflussungseinrichtung 40, 40' in Bereich 33, 33` zwischen 30% und 70% der Sehnenlänge S, S' ein wie oben beschrieben mittlerer Bereich 44, 44' mit einem minimalen Radius rₘᵢₙ ist, kann die weitere Oberflächenstruktur 56, 56` eine Erhöhung sein.

### Bezugszeichenliste

- 1: Gasturbine
- 2: Blisk
- 3: Bliskabschnitt
- 4: Bliskscheibe
- 5: Schaufel-Plattform-Verbindung

- 10: erste Schaufel
- 10`: zweite Schaufel
- 11, 11': Schaufelblatt
- 12, 12': Vorderkante
- 13, 13': Hinterkante
- 14, 14': Schaufelfuß
- 15, 15`: Schaufelspitze
- 16, 16`: Saugseite
- 17, 17`: Druckseite

- 20: Plattform
- 22: Plattformoberfläche bzw. Ringraum
- 30: erstes Fillet
- 30': zweites Fillet
- 31, 31': vorderer Bereich
- 32, 32': Schaufelverbindung
- 34, 34': Plattformverbindung bzw. Ringraumverbindung
- 40: Rissbeeinflussungseinrichtung
- 42: Podest
- 44: mittig angeordneter Bereich

- 50, 50': Oberflächenstruktur
- 52, 52': Oberflächenerhöhung
- 54, 54': Oberflächensenke
- rₘᵢₙ: minimaler Radius
- rₘₐₓ: maximaler Radius
- S: Schaufelsehne

## Patentansprüche

1. Blisk (2), insbesondere Verdichterblisk, für eine Gasturbine (1), umfassend eine Bliskscheibe (4), zumindest eine erste Schaufel (10) mit einem Schaufelblatt (11), einer Vorderkante (12), einer Hinterkante(13), einem Schaufelfuß (14), einer Saugseite (16) und einer Druckseite (17),
eine Plattform (20) bzw. ein Ringraum (20),
ein erstes Fillet (30) das die erste Schaufel (10) mit der Plattform (20) bzw. dem Ringraum (20) verbindet,
**dadurch gekennzeichnet,**
**dass** an der Vorderkante (12) der ersten Schaufel (10) zumindest auf dem ersten Fillet (30) eine erste Oberflächenstruktur (50) angeordnet ist.

2. Blisk (2) nach Anspruch 1, **dadurch gekennzeichnet, dass** das erste Fillet (30) eine Rissbeeinflussungseinrichtung (40) aufweist, welche zur Rissbeeinflussung und zur Strömungsbeeinflussung mit der Oberflächenstruktur (50) zusammenwirkt.

3. Blisk (2) nach Anspruch 2, **dadurch gekennzeichnet, dass** die Rissbeeinflussungseinrichtung (40) zumindest in einem vorderen Bereich (31) des ersten Fillets (30) ausgebildet ist, welcher vordere Bereich sich vor einer Vorderkante (12) und um 30% der Längserstreckung (L) des ersten Fillet (30) von der Vorderkante (12) des Schaufelblatts (11) in Richtung einer Hinterkante (13) erstreckt, und dass die erste Oberflächenstruktur (50) in dem vorderen Bereich (31) des ersten Fillets (30) angeordnet ist.

4. Blisk (2) nach Anspruch 2 oder 3, **dadurch gekennzeichnet, dass** die Rissbeeinflussungseinrichtung (40) zumindest in einem ersten Abschnitt ein in Quererstreckung (Q) des ersten Fillets (30) mittig angeordneter Bereich (44) ist, in dem ein minimaler Radius (rₘᵢₙ) des ersten Fillets (30) ausgebildet ist und der mindestens um 30% der Quererstreckung (Q) des ersten Fillets (30) von der Plattform (20) entfernt ist und die erste Oberflächenstruktur (50) eine Oberflächenerhöhung (52) ist, welche gegenüber angrenzenden Oberflächen erhaben ist.

5. Blisk (2) nach einem der Ansprüche 2 bis 4, **dadurch gekennzeichnet, dass** die Rissbeeinflussungseinrichtung (40) ein Podest (42) des ersten Fillets (30) ist und dass die erste Oberflächenstruktur (50) eine Oberflächensenke (54) ist, welche gegenüber angrenzenden Oberflächen vertieft ist.

6. Blisk (2) nach einem der vorangehenden Ansprüche, **dadurch gekennzeichnet, dass** die erste Oberflächenstruktur (50) in einem druckseitigen, vorderen Bereich (31) der ersten Schaufel (10) in Axialrichtung (Ax) vor einer Vorderkante (12) des Schaufelblatts (11) der ersten Schaufel (10) angeordnet ist.

7. Blisk (2) nach einem der vorangehenden Ansprüche, **dadurch gekennzeichnet, dass** sich die erste Oberflächenstruktur (50) bis auf die Plattform (20) erstreckt.

8. Blisk (2) nach einem der vorangehenden Ansprüche, **dadurch gekennzeichnet, dass** eine erste weitere Oberflächenstruktur (56) saugseitig in einem Bereich zwischen 5% und 95% der Sehnenlänge (S) der ersten Schaufel (10), gemessen auf der maximalen Höhe einer Schaufelverbindung (32) zwischen dem Fillet (30) und dem Schaufelblatt (11), zumindest auf dem Fillet (30) angeordnet ist.

9. Blisk (2) nach Anspruch 8, **dadurch gekennzeichnet, dass** die Rissbeeinflussungseinrichtung (40) zumindest in einem mittleren Bereich des Fillets (30), welcher mittlere Bereich sich von 5% bis 95% der Längserstreckung (L) des Fillets (30) erstreckt, ein in Quererstreckung (Q) des Fillets (30) mittig angeordneter Bereich (44) ist, in dem ein minimaler Radius (rₘᵢₙ) des Fillets (30) ausgebildet ist und der mindestens um 30% der Quererstreckung (Q) des Fillets (30) von der Plattform (20) entfernt ist und dass die erste weitere Oberflächenstruktur (56) eine Oberflächenerhöhung (52) und/oder Oberflächensenke (54) ist, welche gegenüber der angrenzenden Oberfläche erhaben beziehungsweise vertieft ist.

10. Blisk (2) nach Anspruch 8, **dadurch gekennzeichnet, dass** die Rissbeeinflussungseinrichtung (40) zumindest in einem mittleren Bereich des Fillets (30), welcher mittlere Bereich sich von 5% bis 95% der Längserstreckung (L) des Fillets (30) erstreckt, ein Podest (42) des Fillets (30) ist und dass die erste Oberflächenstruktur (50) eine Oberflächenerhöhung (52) und/oder eine Oberflächensenke (54) ist, welche gegenüber der angrenzenden Oberfläche erhaben beziehungsweise vertieft ist.

11. Blisk (2) nach einem der vorangehenden Ansprüche 2 bis 10, **dadurch gekennzeichnet, dass** zumindest eine zu der ersten Schaufel (10) benachbarte zweite Schaufel (10`) mit einem Schaufelblatt (11'), einer Vorderkante (12'), einer Hinterkante (13'), einem Schaufelfuß (14'), einer Saugseite (16') und einer Druckseite (17') auf der Plattform (20) angeordnet ist, und mit einem zweiten Fillet (30') umfassend eine zweite Rissbeeinflussungseinrichtung (40') mit der Plattform (20) verbunden ist, und
- dass an der Vorderkante (12') der zweiten Schaufel (10`) zumindest auf dem zweiten Fillet (30') eine zweite Oberflächenstruktur (50`) angeordnet ist, welche zur Rissbeeinflussung und zur Strömungsbeeinflussung mit der Rissbeeinflussungseinrichtung (40') zusammenwirkt und von der ersten Oberflächenstruktur (50) verschieden ist, und wobei die zweite Oberflächenstruktur (50') eine geringere Erhöhung, wenn die erste Oberflächenstruktur (50) gegenüber den angrenzenden Oberflächen erhaben ist beziehungsweise eine geringere Vertiefung aufweist als die erste Oberflächenstruktur (50), wenn die erste Oberflächenstruktur (50) gegenüber angrenzenden Oberflächen vertieft ist, und/oder
- dass eine zweite weitere Oberflächenstruktur (56') saugseitig in einem Bereich zwischen 5% und 95% der Sehnenlänge (S') der zweiten Schaufel (10'), gemessen auf der maximalen Höhe einer Schaufelverbindung (32') zwischen dem zweiten Fillet (30') und dem Schaufelblatt (11') der zweiten Schaufel (10'), zumindest auf dem zweiten Fillet (30') angeordnet ist und von einer ersten weiteren Oberflächenstruktur (56) verschieden ist, und wobei die zweite weitere Oberflächenstruktur (56') eine geringere Erhöhung beziehungsweise eine geringere Vertiefung aufweist als die erste weitere Oberflächenstruktur (56), und/oder
- dass zwischen der ersten Schaufel (10) und der zweiten Schaufel (20) auf der Plattform (20) und/oder auf dem ersten Fillet (30) und/oder dem zweiten Fillet (30') eine wannenförmige Senke angeordnet ist.
